# EUROPÄISCHE PATENTSCHRIFT

(11) **EP 2 368 742 B1**
(45) Veröffentlichungstag und Bekanntmachung des Hinweises auf die Patenterteilung: **27.11.2013**
(21) Anmeldenummer: 10015705.6
(22) Anmeldetag: 16.12.2010
(51) Int. Cl.: B60K 17/16, B60K 17/22, F16H 37/08, B60K 17/346

(54) **Antriebsanordnung für Kraftfahrzeuge, insbesondere Nutzfahrzeuge**
Drive assembly for motor vehicles, in particular for commercial vehicles
Agencement d'entraînement pour véhicules automobiles, notamment véhicules utilitaires

(30) Priorität: 19.03.2010 DE 102010012085
(43) Veröffentlichungstag der Anmeldung: 28.09.2011
(73) Patentinhaber: MAN Truck & Bus AG, 80995 München (DE)
(72) Erfinder: Ille, Thomas, 82223 Eichenau (DE); Weinfurter, Heinz, 4522 Sierning (AT); Hofmann, Gerald, 81379 München (DE)

(56) Entgegenhaltungen:
- WO-A1-91/06787
- DE-A1- 10 257 063
- FR-A1- 2 294 062
- US-A- 2 298 334
- US-A1- 2004 102 275
- US-B1- 7 331 896

## Beschreibung

Die vorliegende Erfindung betrifft eine Antriebsanordnung für Kraftfahrzeuge, insbesondere Nutzfahrzeuge, gemäß dem Oberbegriff des Patentanspruches 1.

Es ist vielfach üblich (zum Beispiel bei Frontantriebsaggregaten), die Antriebsmaschine, das Geschwindigkeits-Wechselgetriebe und ein Differenzial zu einem kompakten Antriebsaggregat zusammenzubauen, wobei das Differenzial mit seinen Ausgangselementen über Gelenkwellen zumindest eine Achse des Kraftfahrzeuges antreibt. In niedrigen Übersetzungsstufen, zum Beispiel im Anfahrgang, treten dabei hohe Antriebsmomente auf, deren Reaktionsmomente über die Aggregatelagerung abgestützt werden müssen bzw. Verspannungen und Überbelastungen im Antriebsstrang bewirken können.

FR 2 294 062 A1 offenbart einen Fahrzeugantrieb, wobei die Baugruppe Motor, Getriebe und Differential, die im vorderen Bereich des Fahrzeuges angeordnet ist, mit jedem der angetriebenen Räder oder jedem der angetriebenen Radpaare, die im hinteren Bereich des Fahrzeuges liegen, über eine Transmissionswelle verbunden ist, und jede dieser Transmissionswellen abgesenkt bezüglich der Achse der angetriebenen Räder und bezüglich der Ausgangswelle des Getriebes liegt sowie ferner durch das genannte Differential angetrieben ist. DE 102 57 063 A1 beschreibt einen Allradantrieb für Fahrzeuge, mit einem Motor und einem daran angeflanschten Getriebe, einem Längsdifferential, das mit einer Ausgangswelle des Getriebes verbunden ist und das zur Aufteilung des Getriebeausgangsmoments in ein Vorderachsdrehmoment und ein Hinterachsdrehmoment vorgesehen ist, einem Vorderachsdifferential, welches das Vorderachsdrehmoment in ein linkes bzw. rechtes Vorderraddrehmoment für das linke bzw. rechte Vorderrad aufteilt, und einem Hinterachsdifferential, welches das Hinterachsdrehmoment in ein linkes bzw. rechtes Hinterraddrehmoment für das linke bzw. rechte Hinterrad aufteilt. Zum Stand der Technik ist ferner hinzuweisen auf die US 2004/102275 A1, die US 2 298 334 A, die WO 91/06787 A1 und die US 7 331 896 B1.

Aufgabe der Erfindung ist es, eine Antriebsanordnung der gattungsgemäßen Art vorzuschlagen, die neben baulichen und konstruktiven Vorteilen derartige Reaktionsmomente auf das gesamte Antriebsaggregat weitgehendst eliminiert oder deren Höhe und Wirkrichtung entsprechend konstruktiver Erfordernisse gezielt einstellen kann.

Die Lösung dieser Aufgabe gelingt mit den kennzeichnenden Merkmalen des Patentanspruches 1. Vorteilhafte und besonders zweckmäßige Weiterbildungen der Erfindung sind in den Unteransprüchen angeführt.

Erfindungsgemäß wird vorgeschlagen, dass das Differenzial mit seinen Ausgangselementen auf zwei im Antriebsaggregat drehbar gelagerte und gegenläufig angetriebene Abtriebswellen wirkt, die mit je einer Gelenkwellen trieblich verbunden sind, wobei die Gelenkwellen die angetriebenen Räder des Kraftfahrzeuges antreiben. Gemäß einer hierzu bevorzugten, jedoch nicht zwingenden Ausgestaltung ist vorgesehen, dass die Gelenkwellen die angetriebenen Räder des Kraftfahrzeuges über Winkeltriebe antreiben.

Durch die gegenläufig drehenden Abtriebswellen und Gelenkwellen heben sich die auf das Antriebsaggregat wirkenden Kippmomente bzw. Reaktionsmomente gegenseitig auf, wodurch die zwischen dem Antriebsaggregat und dem tragenden Unterbau des Kraftfahrzeuges angeordneten Aggregatelager wesentlich entlastet werden bzw. konstruktiv weniger aufwendig ausgeführt sein müssen. Ferner können die abtreibenden Getriebeelemente wie Abtriebswellen, die Gelenkwellen, die Winkeltriebe, etc. leichter ausgeführt sein, weil sich das maximale Abtriebsmoment im Wesentlichen zu 50% auf die beiden Abtriebsstränge aufteilt.

Ein wesentlicher Vorteil der Erfindung liegt auch darin, dass sich zwischen Motor- und Getriebegehäuse lediglich das Antriebsmoment des Motors abstützt. Das heißt, dass erfindungsgemäß an dieser Stelle, im Gegensatz zu den Ausführungsformen gemäß des Standes der Technik, das entsprechend der maximalen Getriebeübersetzung vielfach erhöhte Antriebsmoment nicht auftritt, so dass damit die hohen Belastungen auf Schwungradgehäuse und Kupplungsglocke vermieden werden können.

Ein weiterer sich mit der erfindungsgemäßen Lösung ergebender Vorteil liegt darin, dass der Zuganschlag der Motorlager so gestalten werden kann, dass dynamische Schwingungsanregungen aus der Fahrbahn abgebaut werden, ohne dass dabei Rücksicht auf akustische Übertragungswege unter Antriebslast genommen werden muss. Der lineare Steifigkeitsbereich der Motorlager kann somit stark eingeengt werden.

Das in das Antriebsaggregat integrierte Differenzial kann in einer ersten vorteilhaften Ausgestaltung der Erfindung ein Achsdifferenzial sein, wobei die beiden sich zu einer Achse des Kraftfahrzeuges erstreckenden Gelenkwellen auf je Radseite des Kraftfahrzeuges angeordnete Winkeltriebe wirken. Das Achsdifferenzial liegt somit nicht mehr zwischen den angetriebenen Rädern der Achse, sondern ist in das Antriebsaggregat integriert, während der unmittelbare Antrieb der Räder mittels entsprechender Antriebswellen und die Winkeltriebe erfolgt. Damit können gegebenenfalls auch die ungefederten' Massen der Achse, insbesondere einer Hinterachse des Kraftfahrzeuges, vermindert werden.

Das Differenzial kann bevorzugt ein baulich robustes und konstruktiv einfaches Kegelraddifferenzial sein, dessen quer verlaufende Achswellen als Ausgangselemente auf im Differenzialgehäuse integrierte Kegeltriebe abtreiben, deren beide Abtriebswellen mit den Gelenkwellen trieblich verbunden sind.

In einer vorteilhaften, alternativen Ausgestaltung kann das Differenzial mit seinem einen Ausgangselement über die eine Abtriebswelle direkt auf die eine Gelenkwelle und mit seinem zweiten Ausgangselement über einen die Drehrichtung umkehrenden Zahnradtrieb und eine parallel zum Differenzial drehbar gelagerte Abtriebswelle auf die zweite Gelenkwelle wirken. Diese Lösung bietet insbesondere bei einem Längseinbau des Antriebaggregates eine günstige, konstruktiv relativ einfach beeinflussbare Gewichtsaufteilung und Anordnung der Bauteile, zum Beispiel bei einer Brennkraftmaschine als Antriebsmaschine, einem Schaltgetriebe oder einem automatischem Getriebe als Geschwindigkeits-Wechselgetriebe und dem integrierten Differenzial.

Dabei können ferner die Abtriebswellen achsparallel und die zu der angetriebenen Achse verlaufenden Gelenkwellen mit ihren Längsmittelachsen konvergierend oder divergierend ausgerichtet sein und somit weitere konstruktive Freiheitsgrade bei der Aggregateauslegung ermöglichen.

Des Weiteren kann das Differenzial in an sich bekannter Weise ein Planetenradgetriebe sein, beispielsweise mit einem Planetenradträger als Eingangselement und einem Hohlrad und einem Sonnenrad als Ausgangselemente, die über die Abtriebswellen auf die Gelenkwellen abtreiben. Ein derartiges Planetenradgetriebe benötigt insbesondere in axialer Erstreckung wenig Bauraum, so dass kompakte Aggregatemaße verwirklichbar sind.

Das in das Antriebsaggregat integrierte Differenzial kann bei einem Kraftfahrzeug mit Allradantrieb ein Zwischenachsdifferenzial sein, dessen Ausgangselemente über entgegengesetzt aus dem Antriebsaggregat herausgeführte, gegenläufig drehende Abtriebswellen und die Gelenkwellen auf ein vorderes und ein hinteres Achsdifferenzial der beiden angetriebenen Achsen des Kraftfahrzeuges wirken. Die besagten Winkeltriebe sind dann unmittelbar in die zwischen den beiden Achsen vorgesehenen Differenziale integriert (zum Beispiel als Tellerrad und Antriebsritzel).

In weiterer, besonders zweckmäßiger Ausgestaltung der Erfindung können die Übersetzungsverhältnisse des abtreibenden Differenziales und die Übersetzungsverhältnisse der Winkeltriebe an den Rädern des Kraftfahrzeuges derart unterschiedlich ausgelegt sein, dass bei einheitlichen Endübersetzungen an den Rädern geringfügig unterschiedliche Drehzahlen an den Gelenkwellen vorliegen. Damit wird vermieden, dass gegebenenfalls akustisch und schwingungstechnisch ungünstige Phasenlagen der beiden Gelenkwellen sich dauerhaft überlagern und gegebenenfalls ausgeprägte Resonanzerscheinungen bewirken.

In weiterer, vorteilhafter Ausgestaltung der Erfindung wird vorgeschlagen, dass die Gehäuse der beiden radseitigen Winkeltriebe der angetriebenen Achse durch zumindest eine Drehmomentstütze fest miteinander verbunden sind. Damit heben sich auch die an den Gehäusen der Winkeltriebe wirkenden Reaktionsmomente, die ansonsten über Radführungselemente der Achse abzustützen wären, gegenseitig auf. Die Drehmomentstütze kann gegebenenfalls als Leichtbauteil ausgeführt sein und nur einen geringen konstruktiven Mehraufwand darstellen.

Insbesondere für Nutzfahrzeuge kann es besonders zweckmäßig sein, wenn im Antriebsstrang zwischen dem in das Antriebsaggregat integrierten Differenzial und zumindest der angetriebenen Hinterachse des Kraftfahrzeuges eine Differenzialsperre vorgesehen ist, wobei die Differenzialsperre besonders bevorzugt als schaltbare Kupplung zwischen die radseitigen Winkeltriebe eingeschaltet ist und die beiden mit den Rädern trieblich verbundenen Antriebswellen zusammenschaltet.

Mehrere Ausführungsbeispiele der Erfindung sind im Folgenden mit weiteren Einzelheiten näher erläutert. Die anliegende, schematische Zeichnung zeigt in:
- Fig. 1: eine Antriebsanordnung für Nutzfahrzeuge, mit einem Antriebsaggregat mit einer antreibenden Brennkraftmaschine, einem nachgeschalteten Geschwindigkeits-Wechselgetriebe und einem integrierten Differenzial, das über Abtriebswellen und Gelenkwellen auf radseitige Winkeltriebe der Hinterachse des Kraftfahrzeuges abtreibt;
- Fig. 2: eine weitere Antriebsanordnung gemäß Fig. 1, bei der das Differenzial jedoch über in das Antriebsaggregat integrierte Winkeltriebe trieblich mit den Gelenkwellen verbunden ist;
- Fig. 3: eine weitere, alternative Antriebsanordnung gemäß Fig. 1, mit einem Planetenradgetriebe als integriertes Differenzial; und
- Fig. 4: eine weitere Antriebsanordnung, bei der das in das Antriebsaggregat integrierte Differenzial ein Zwischenachsdifferenzial ist, dessen Ausgangselemente über gegenläufige Gelenkwellen eine Vorderachse und eine Hinterachse des Kraftfahrzeuges antreiben.

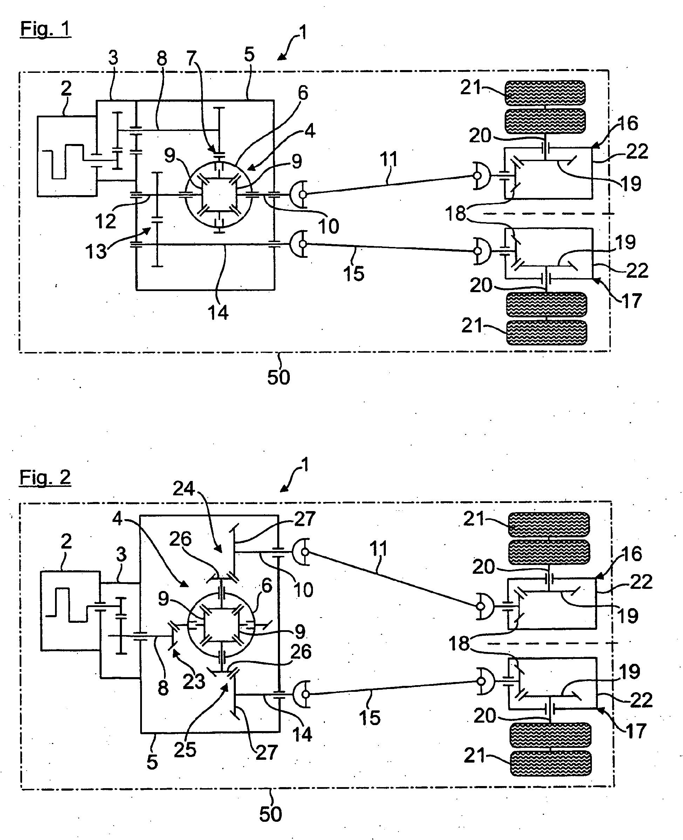

In der Fig. 1 ist mit 1 ein Antriebsaggregat für ein Nutzfahrzeug bezeichnet, das sich im Wesentlichen aus einer Antriebsmaschine bzw. einer Brennkraftmaschine 2, einer Trennkupplung (nicht dargestellt), einem Geschwindigkeits-Wechselgetriebe 3 und einem integrierten Differenzial 4 zusammensetzt.

Das Antriebsaggregat 1 ist zu einer Baueinheit zusammengebaut und in nicht dargestellter Weise über Aggregatelager am hier lediglich äußerst schematisch und beispielhaft strichpunktiert gezeigten Chassis 50 des Nutzfahrzeuges aufgehängt. Das Differenzial 4 ist dabei mit seinem Gehäuse 5 am Wechselgetriebe 3 angeflanscht. Es kann aber auch unmittelbar in das Gehäuse des Wechselgetriebes 3 integriert sein.

Die Brennkraftmaschine 2 und das Wechselgetriebe 3 können herkömmlicher Bauart sein und sind deshalb zeichnerisch nur angedeutet.

Das Differenzial 4 ist ein Kegelraddifferenzial, dessen Ausgleichsgehäuse 6 über einen Stirnradtrieb 7 von der Ausgangswelle 8 des Wechselgetriebes 3 angetrieben ist.

Die als Ausgangselemente dienenden Kegelräder 9 des Differenziales 4 sind einerseits unmittelbar über eine koaxiale Abtriebswelle 10 mit einer Gelenkwelle 11 trieblich verbunden, während sie andererseits über eine Zwischenwelle 12 und einen Stirnradtrieb 13 auf eine zweite Abtriebswelle 14 abtreiben. An die Abtriebswelle 14 ist eine zweite Gelenkwelle 15 angeschlossen.

Die koaxial angeordnete Abtriebswelle 10 und Zwischenwelle 12 liegen achsparallel zur Abtriebswelle 14 und sind wie angedeutet im Gehäuse 5 drehbar gelagert. Durch die Zwischenschaltung des Stirnradtriebes 13 mit den beiden Stirnzahnrädern (ohne Bezugszeichen) drehen die beiden Abtriebswellen 10, 14 bzw. die Gelenkwellen 11, 15 (auch als Kardanwellen bezeichnet) gegenläufig.

Eine jede Gelenkwelle 11, 15 ist an einen Winkeltrieb 16, 17 der nicht dargestellten Hinterachse des Nutzfahrzeuges angeschlossen, wobei jeweils ein Kegelritzel 18 ein Kegelzahnrad 19 antreibt. Die Kegelzahnräder 19 sind über Antriebswellen 20 mit den Hinterrädern 21 des Nutzfahrzeuges trieblich verbunden. Die Kegelritzel 18 und die Kegelräder 19 mit den Antriebswellen 20 sind in den Gehäusen 22 der Winkeltriebe 16, 17 drehbar gelagert.

Durch die wie ersichtlich spiegelbildliche Anordnung der Winkeltriebe 16, 17 drehen die angetriebenen Räder 21 der Hinterachse gleichsinnig, während die Gelenkwellen 11, 15 gegenläufig drehen, so dass sich deren Reaktionsmomente (Kippmomente) auf das Antriebsaggregat 1 gegenseitig aufheben.

Die Fig. 2 zeigt ein weiteres Ausführungsbeispiel für die Antriebsanordnung, die nur soweit beschrieben ist, als sie sich von der Ausführung gemäß Fig. 1 unterscheidet. Funktionell gleiche Teile sind mit gleichen Bezugszeichen versehen.

Gemäß Fig. 2 ist die Drehachse des Differenziales 4 nicht achsparallel zur Ausgangswelle 8 des Wechselgetriebes 4, sondern quer dazu ausgerichtet und treibt das Differenzial 4 bzw. dessen Ausgleichsgehäuse 6 über einen Winkeltrieb 23 an.

Ferner treiben die Kegelräder 9 als Ausgangselemente des Differenziales 4 über weitere Winkeltriebe 24, 25 mit Kegelritzeln 26 und Kegelrädern 27 auf die zwei Abtriebswellen 10, 14, die wie vorstehend mit den beiden Gelenkwellen 11, 15 trieblich verbunden sind, die wiederum auf die achsseitigen Winkeltriebe 16, 17 abtreiben.

Während im Ausführungsbeispiel nach Fig. 1 die beiden Abtriebswellen 10, 14 relativ nahe beieinander liegen und die Gelenkwellen 11, 15 in Anpassung an die Positionierung der Winkeltriebe 16, 17 mit ihren Drehachsen in Kraftflussrichtung divergieren, verlaufen sie gemäß Fig. 2 aufgrund der weiter auseinander liegenden Positionierung der Abtriebswellen 10, 14 konvergierend.

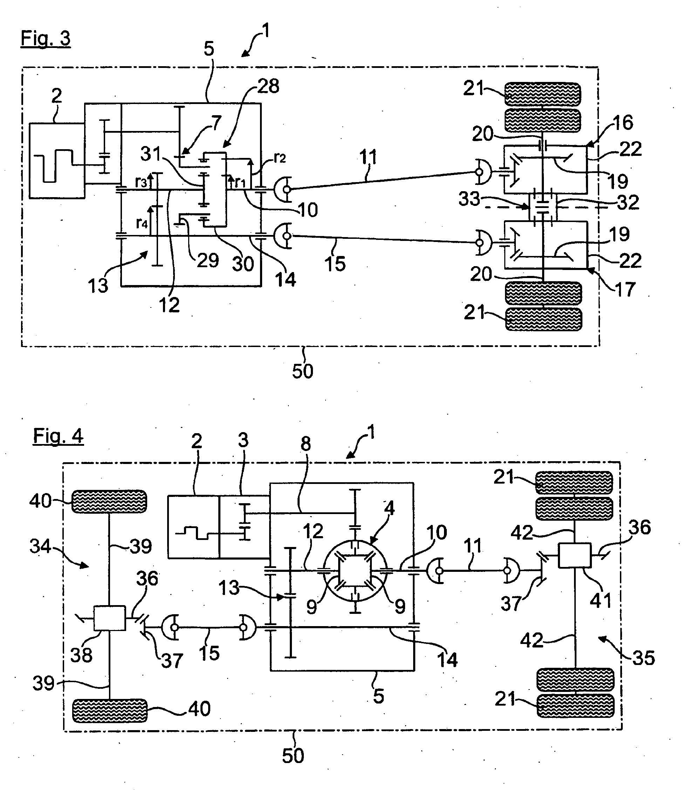

Die Fig. 3 zeigt ein alternatives Ausführungsbeispiel der Antriebsanordnung, bei dem das Differenzial als ein Planetenraddifferenzial 28 ausgeführt ist.

Als Eingangselement des Planetenradgetriebes 28 dient der Planetenradträger 29, der über den Stirnradtrieb 7 von der Ausgangswelle 8 des Wechselgetriebes 3 angetrieben ist und der über die Planetenräder (ohne Bezugszeichen) auf das innenverzahnte Hohlrad 30 und auf das außenverzahnte Sonnenrad 31 als Ausgangselemente des Planetenradgetriebes 28 wirkt.

Das Hohlrad 30 treibt unmittelbar die Abtriebswelle 10 an, die wie vorstehend mit der Gelenkwelle 11 trieblich verbunden ist. Das Sonnenrad 31 ist mit der koaxialen Zwischenwelle 12 drehfest verbunden und treibt über den Stirnzahnradtrieb 13 die Abtriebswelle 14 und diese die zweite Gelenkwelle 15 an. Im Übrigen erfolgt der Kraftfluss von den Gelenkwellen 11, 15 wie vorstehend zu den Fig. 1 und 2 beschrieben auf die Winkeltriebe 16, 17.

Eine gleichmäßige Momentenaufteilung auf die beiden Gelenkwellen 11, 15 kann bei dem dargestellten Planetenradgetriebe 28 dadurch erzielt werden, dass die eingezeichneten Radien r zwischen den Drehachsen der Abtriebswellen 10, 14 und der Zwischenwelle 12 definiert ausgelegt sind. Bei Geradeausfahrt gilt hier r₁:r₂ = r₃:r₄. Es sind aber davon abweichende Auslegungen ebenso verwirklichbar.

Zwischen den Gehäusen 22 der Winkeltriebe 16, 17 ist alternativ zum bisherigen Starrachsgehäuse eine rohrförmige Leichtbau-Drehmomentstütze 32 denkbar, die die beiden Gehäuse 22 fest miteinander verbindet.

Innerhalb der Drehmomentstütze 32 ist eine schaltbare Klauenkupplung 33 (nur angedeutet) vorgesehen, mittels der die beiden entsprechend verlängerten Antriebswellen 20 über dort befestigte Kupplungselemente zur Funktion einer Differenzialsperre miteinander kuppelbar sind, so dass ein Anfahren des Nutzfahrzeuges auch bei ungünstigen Fahrbahnverhältnissen sichergestellt ist. Das Antriebsdrehmoment wird dabei gleichmäßig auf beide Gelenkwellen aufgeteilt. Diese Differenzialsperre ist hier beispielhaft lediglich in Verbindung mit der Fig. 3 gezeichnet. Selbstverständlich ist deren Einsatz auch in Verbindung mit den zuvor beschriebenen Ausführungsformen der Fig. 1 und 2 sinnvoll, ohne dass dies dort nochmals explizit dargestellt ist.

Die Fig. 4 schließlich zeigt eine Antriebsanordnung für ein allradgetriebenes Nutzfahrzeug, bei dem die beiden Abtriebswellen 11, 14 gegenüberliegend, das heißt nach vorne einer Vorderachse 34 zu und nach hinten der Hinterachse 35 zu aus dem Antriebsaggregat 1 bzw. dem Differenzialgehäuse 5 herausgeführt sind und mit den Gelenkwellen 11, 15 trieblich verbunden sind.

Die nach vorne geführte Gelenkwelle 15 treibt über ein Tellerrad 36 und ein Antriebsritzel 37 als Winkeltrieb das vordere Differenzial 38 an, das über Antriebswellen 39 auf die Vorderräder 40 des Nutzfahrzeuges abtreibt.

Die hintere Gelenkwelle 11 treibt ebenso über ein Tellerrad 36 und ein Antriebsritzel 37 als weiteren Winkeltrieb das hintere Differenzial 41 an, das über Antriebswellen 42 die Zwillings-Hinterräder 21 des Nutzfahrzeuges antreibt.

Die Achsdifferenziale 38, 41 sind soweit nicht beschrieben herkömmlicher Bauart, zum Beispiel als Kegelraddifferenziale ausgeführt. Das Hinterachsdifferenzial 41 kann gegebenenfalls als Sperrdifferenzial bekannter Bauart konzipiert sein.

Wie vorstehend beschrieben drehen die Abtriebswellen 10, 14 bzw. die Gelenkwellen 11, 15 in entgegengesetzter Drehrichtung, so dass wiederum auf das Antriebsaggregat 1 wirkende Reaktionselemente bzw. Kippelemente aus den Antriebsmomenten weitgehendst eliminiert sind. Darüber hinaus gleicht das Zwischenachsdifferenzial 4 in bekannter Weise Drehzahlunterschiede zwischen der Vorderachse 34 und der Hinterachse 35 zur Vermeidung von Verspannungen im Antriebssystem aus.

Bei den zuvor beschriebenen Ausführungsformen wirkt somit das Differenzial 4 bzw. 28 mit seinen Ausgangselementen 9,12 bzw. 30, 31 dergestalt auf zwei im Antriebsaggregat drehbar gelagerte und gegenläufig angetriebene Abtriebswellen 10, 14, dass sich zwischen Motor- und Getriebegehäuse lediglich das Antriebsmoment des Motors abstützt sowie vorzugsweise zwischen Motor-Getriebe-Einheit und Fahrzeug-Chassis 50 kein Antriebsmoment abgestützt wird.

## Patentansprüche

1. Antriebsanordnung für Kraftfahrzeuge, insbesondere Nutzfahrzeuge, mit einer Antriebsmaschine, einem nachgeschalteten Geschwindigkeits-Wechselgetriebe und einem Differenzial, die zu einem Antriebsaggregat fest zusammengebaut sind, wobei das Differenzial auf zumindest eine angetriebene Achse des Kraftfahrzeuges abtreibt, **dadurch gekennzeichnet, dass** das Differenzial (4; 28) mit seinen Ausgangselementen (9,12; 30, 31) auf zwei im Antriebsaggregat (1) drehbar gelagerte und gegenläufig angetriebene Abtriebswellen (10, 14) wirkt, die mit je einer, die angetriebenen Räder (21, 40) des Kraftfahrzeuges antreibenden Gelenkwelle (11, 15) trieblich verbunden sind, wodurch die sich auf das Antriebsaggregat wirkenden Kipp- oder Reaktionsmomente zumindest weitgehendst gegenseitig aufheben.

2. Antriebsanordnung, insbesondere nach Anspruch 1, **dadurch gekennzeichnet, dass** das Differenzial (4; 28) mit seinen Ausgangselementen (9,12; 30, 31) dergestalt auf zwei im Antriebsaggregat (1) drehbar gelagerte und gegenläufig angetriebene Abtriebswellen (10, 14) wirkt, dass sich zwischen Motor- und Getriebegehäuse lediglich das Antriebsmoment des Motors abstützt sowie vorzugsweise zwischen Motor-Getriebe-Einheit und Fahrzeug-Chassis (50) kein Antriebsmoment abgestützt wird.

3. Antriebsanordnung nach Anspruch 1 oder 2, **dadurch gekennzeichnet, dass** die Gelenkwellen (11, 15) die angetriebenen Räder (21, 40) des Kraftfahrzeuges über Winkeltriebe (16, 17; 36, 37) antreiben.

4. Antriebsanordnung nach einem oder mehreren der vorhergehenden Ansprüche, **dadurch gekennzeichnet, dass** das in das Antriebsaggregat (1) integrierte Differenzial ein Achsdifferenzial (4; 28) ist und dass die beiden sich zu einer Achse (35) des Kraftfahrzeuges erstreckenden Gelenkwellen (11, 15) auf je Radseite des Kraftfahrzeuges angeordnete Winkeltriebe (16, 17) wirken.

5. Antriebsanordnung nach einem oder mehreren der vorhergehenden Ansprüche, **dadurch gekennzeichnet, dass** das Differenzial (4) ein Kegelraddifferenzial ist, dessen quer verlaufende Achswellen (26) als Ausgangselemente auf im Differenzialgehäuse (5) integrierte Kegeltriebe (24, 25) abtreiben, deren Abtriebswellen (10, 14) mit den Gelenkwellen (11, 15) trieblich verbunden sind.

6. Antriebsanordnung nach einem der Ansprüche 1 bis 4, **dadurch gekennzeichnet, dass** das Differenzial (4) mit seinem einen Ausgangselement (9) über die eine Abtriebswelle (10) direkt auf die eine Gelenkwelle (11) und mit seinem zweiten Ausgangselement (9) über einen die Drehrichtung umkehrenden Zahnradtrieb (13) und eine parallel zum Differenzial (4) drehbar gelagerte Abtriebswelle (14) auf die zweite Gelenkwelle (15) wirkt.

7. Antriebsanordnung nach einem oder mehreren der vorhergehenden Ansprüche, **dadurch gekennzeichnet, dass** die Abtriebswellen (10, 14) achsparallel und die zu der angetriebenen Achse (35) verlaufenden Gelenkwellen (11, 15) mit ihren Längsmittelachsen konvergierend oder divergierend ausgerichtet sind.

8. Antriebsanordnung nach einem oder mehreren der vorhergehenden Ansprüche, **dadurch gekennzeichnet, dass** das Differenzial ein Planetenradgetriebe (28) ist, mit einem Planetenradträger (29) als Eingangselement und einem Hohlrad (30) und einem Sonnenrad (31) als Ausgangselemente, die über die Abtriebswellen (10, 14) auf die Gelenkwellen (11, 15) abtreiben.

9. Antriebsanordnung nach einem oder mehreren der vorhergehenden Ansprüche, **dadurch gekennzeichnet, dass** das in das Antriebsaggregat (1) integrierte Differenzial ein Zwischenachsdifferenzial (4) ist, dessen Ausgangselemente (9) über entgegengesetzt aus dem Antriebsaggregat (1) herausgeführte, gegenläufig drehende Abtriebswellen (10, 14) und die Gelenkwellen (11, 15) auf ein vorderes Achsdifferenzial (38) und ein hinteres Achsdifferenzial (41) der beiden angetriebenen Achsen (34, 35) des Kraftfahrzeuges wirken.

10. Antriebsanordnung nach einem oder mehreren der vorhergehenden Ansprüche, **dadurch gekennzeichnet, dass** die Übersetzungsverhältnisse des antreibenden Differenziales (4; 28) und die Übersetzungsverhältnisse der Winkeltriebe (16, 17; 36, 37) derart unterschiedlich ausgelegt sind, dass bei einheitlichen Endübersetzungen an den Rädern (21, 40) geringfügig unterschiedliche Drehzahlen an den Gelenkwellen (11, 15) vorliegen.

11. Antriebsanordnung nach einem oder mehreren der vorhergehenden Ansprüche, **dadurch gekennzeichnet, dass** die Gehäuse (22) der beiden radseitigen Winkeltriebe (16, 17) der angetriebenen Achse (35) durch zumindest eine Drehmomentstütze (32) fest miteinander verbunden sind.

12. Antriebsanordnung nach einem oder mehreren der vorhergehenden Ansprüche, **dadurch gekennzeichnet, dass** im Antriebsstrang zwischen dem in das Antriebsaggregat (1) integrierten Differenzial (4; 28) und zumindest der angetriebenen Hinterachse (35) des Kraftfahrzeuges eine Differenzialsperre (33) vorgesehen ist.

13. Antriebsanordnung nach Anspruch 12, **dadurch gekennzeichnet, dass** die Differenzialsperre als schaltbare Kupplung (33) zwischen die radseitigen Winkeltriebe (16, 17) eingeschaltet ist, wobei die Kupplung (33) die beiden mit den Rädern (21) trieblich verbundenen Antriebswellen (20) verbindet.

## Claims

1. Drive arrangement for motor vehicles, in particular utility vehicles, having a drive engine, having a speed-change transmission connected downstream and having a differential, these components being fixedly assembled to form a drive assembly, wherein the differential outputs drive to at least one driven axle of the motor vehicle, **characterized in that** the differential (4; 28) acts by way of its output elements (9, 12; 30, 31) on two drive output shafts (10, 14) which are rotatably mounted in the drive assembly (1) and which are driven in opposite directions, which drive output shafts are connected in terms of drive to in each case one articulated shaft (11, 15) driving the driven wheels (21, 40) of the motor vehicle, whereby the tilting or reaction moments acting on the drive assembly at least substantially cancel one another out.

2. Drive arrangement, in particular according to Claim 1, **characterized in that** the differential (4; 28) acts by way of its output elements (9, 12; 30, 31) on two drive output shafts (10, 14) which are rotatably mounted in the drive assembly (1) and which are driven in opposite directions, in such a way that only the drive torque of the engine is supported between the engine housing and transmission housing, and preferably no drive torque is supported between the engine-transmission unit and the vehicle chassis (50).

3. Drive arrangement according to Claim 1 or 2, **characterized in that** the articulated shafts (11, 15) drive the driven wheels (21, 40) of the motor vehicle via angle drives (16, 17; 36, 37).

4. Drive arrangement according to one or more of the preceding claims, **characterized in that** the differential that is integrated into the drive assembly (1) is an axle differential (4; 28), and **in that** the two articulated shafts (11, 15) that extend to an axle (35) of the motor vehicle act on angle drives (16, 17) arranged on each wheel side of the motor vehicle.

5. Drive arrangement according to one or more of the preceding claims, **characterized in that** the differential (4) is a bevel-gear differential whose transversely extending axle shafts (26) as output elements output drive to bevel-gear drives (24, 25) which are integrated in the differential housing (5) and whose drive output shafts (10, 14) are connected in terms of drive to the articulated shafts (11, 15).

6. Drive arrangement according to one of Claims 1 to 4, **characterized in that** the differential (4) acts, by way of one output element (9) thereof, directly on one articulated shaft (11) via one drive output shaft (10) and, by way of the second output element (9) thereof, on the second articulated shaft (15) via a rotational-direction-reversing gearwheel drive (13) and via a drive output shaft (14) rotatably mounted parallel to the differential (4).

7. Drive arrangement according to one or more of the preceding claims, **characterized in that** the drive output shafts (10, 14) are oriented axially parallel, and the articulated shafts (11, 15) that extend to the driven axle (35) are oriented with their longitudinal central axes in a converging or diverging configuration.

8. Drive arrangement according to one or more of the preceding claims, **characterized in that** the differential is a planetary gear set (28), having a planet gear carrier (29) as an input element and having an internal gear (30) and a sun gear (31) as output elements which output drive to the articulated shafts (11, 15) via the drive output shafts (10, 14).

9. Drive arrangement according to one or more of the preceding claims, **characterized in that** the differential integrated into the drive assembly (1) is an inter-axle differential (4) whose output elements (9) act on a front axle differential (38) and on a rear axle differential (41) of the two driven axles (34, 35) of the motor vehicle via drive output shafts (10, 14), which are led out of the drive assembly (1) in opposite directions and which rotate in opposite directions, and via the articulated shafts (11, 15).

10. Drive arrangement according to one or more of the preceding claims, **characterized in that** the transmission ratios of the driving differential (4; 28) and the transmission ratios of the angle drives (16, 17; 36, 37) are configured differently such that, with the final transmission ratios at the wheels (21, 40) being the same, the articulated shafts (11, 15) rotate at slightly different rotational speeds.

11. Drive arrangement according to one or more of the preceding claims, **characterized in that** the housings (22) of the two wheel-side angle drives (16, 17) of the driven axle (35) are fixedly connected to one another by means of at least one torque brace (32).

12. Drive arrangement according to one or more of the preceding claims, **characterized in that** a differential lock (33) is provided in the drivetrain between the differential (4; 28) integrated into the drive assembly (1) and at least the driven rear axle (35) of the motor vehicle.

13. Drive arrangement according to Claim 12, **characterized in that** the differential lock, in the form of a switchable clutch (33), is connected between the wheel-side angle drives (16, 17), wherein the clutch (33) connects the two driveshafts (20) to which the wheels (21) are connected in terms of drive.

## Revendications

1. Agencement d'entraînement pour véhicules automobiles, en particulier véhicules utilitaires, comprenant une machine d'entraînement, une boîte de vitesses à changement de rapports montée en aval, et un différentiel, lesquels sont assemblés fixement pour constituer un groupe motopropulseur, le différentiel fournissant l'entraînement à au moins un essieu entraîné du véhicule automobile, **caractérisé en ce que** le différentiel (4 ; 28) agit avec ses éléments de sortie (9, 12 ; 30, 31) sur deux arbres de prise de force (10, 14) montés à rotation dans le groupe motopropulseur (1) et entraînés en sens inverse, qui sont connectés par entraînement à un arbre articulé respectif (11, 15) entraînant les roues motrices (21, 40) du véhicule automobile, de sorte que les couples de basculement ou de réaction agissant sur le groupe motopropulseur s'annulent mutuellement au moins en majeure partie.

2. Agencement d'entraînement, en particulier selon la revendication 1, **caractérisé en ce que** le différentiel (4 ; 28) agit avec ses éléments de sortie (9, 12 ; 30, 31) sur deux arbres de prise de force (10, 14) montés à rotation dans le groupe motopropulseur (1) et entraînés en sens inverse, de telle sorte qu'entre le carter du moteur et le carter de la boîte de vitesses seul le couple d'entraînement du moteur s'applique, et qu'aucun couple d'entraînement ne s'applique de préférence entre l'unité moteur-boîte de vitesses et le châssis du véhicule (50).

3. Agencement d'entraînement selon la revendication 1 ou 2, **caractérisé en ce que** les arbres articulés (11, 15) entraînent les roues motrices (21, 40) du véhicule automobile par le biais de renvois d'angle (16, 17 ; 36, 37).

4. Agencement d'entraînement selon l'une ou plusieurs des revendications précédentes, **caractérisé en ce que** le différentiel intégré dans le groupe motopropulseur (1) est un différentiel d'essieu (4 ; 28) et **en ce que** les deux arbres articulés (11, 15) s'étendant vers un axe (35) du véhicule automobile agissent sur des renvois d'angle (16, 17) disposés de chaque côté des roues du véhicule automobile.

5. Agencement d'entraînement selon l'une ou plusieurs des revendications précédentes, **caractérisé en ce que** le différentiel (4) est un différentiel à roue conique dont les arbres d'essieu (26) s'étendant transversalement fournissent l'entraînement en tant qu'éléments de sortie à des entraînements par roues coniques (24, 25) intégrés dans le carter de différentiel (5), dont les arbres de prise de force (10, 14) sont connectés par entraînement aux arbres articulés (11, 15).

6. Agencement d'entraînement selon l'une quelconque des revendications 1 à 4, **caractérisé en ce que** le différentiel (4) agit avec l'un de ses éléments de sortie (9) par le biais de l'un des arbres de prise de force (10) directement sur l'un des arbres articulés (11) et avec son deuxième élément de sortie (9) par le biais d'un entraînement à roue dentée (13) inversant le sens de rotation et d'un arbre de prise de force (14) monté à rotation parallèlement au différentiel (4) sur le deuxième arbre articulé (15).

7. Agencement d'entraînement selon l'une ou plusieurs des revendications précédentes, **caractérisé en ce que** les arbres de prise de force (10, 14) sont orientés avec leurs axes parallèles et les arbres articulés (11, 15) s'étendant vers l'essieu moteur (35) sont orientés avec leurs axes médians longitudinaux de manière convergente ou divergente.

8. Agencement d'entraînement selon l'une ou plusieurs des revendications précédentes, **caractérisé en ce que** le différentiel est un engrenage planétaire (28), avec un porte-satellites (29) en tant qu'élément d'entrée et une couronne dentée (30) et une roue solaire (31) en tant qu'éléments de sortie, qui fournissent l'entraînement par le biais des arbres de prise de force (10, 14) aux arbres articulés (11, 15).

9. Agencement d'entraînement selon l'une ou plusieurs des revendications précédentes, **caractérisé en ce que** le différentiel intégré dans le groupe motopropulseur (1) est un différentiel intermédiaire (4) dont les éléments de sortie (9) agissent par le biais d'arbres de prise de force (10, 14) tournant en sens inverse, guidés à l'opposé l'un de l'autre hors du groupe motopropulseur (1), et les arbres articulés (11, 15) agissent sur un différentiel d'essieu avant (38) et un différentiel d'essieu arrière (41) des deux essieux moteurs (34, 35) du véhicule automobile.

10. Agencement d'entraînement selon l'une ou plusieurs des revendications précédentes, **caractérisé en ce que** les rapports de démultiplication du différentiel moteur (4 ; 28) et les rapports de démultiplication des renvois d'angle (16, 17; 36, 37) sont conçus différemment de telle sorte que des vitesses de rotation légèrement différentes se présentent au niveau des arbres articulés (11, 15) pour des démultiplications finales unitaires au niveau des roues (21, 40).

11. Agencement d'entraînement selon l'une ou plusieurs des revendications précédentes, **caractérisé en ce que** les carters (22) des deux renvois d'angle (16, 17) du côté des roues de l'essieu moteur (35) sont connectés fixement l'un à l'autre par au moins un support de couple (32).

12. Agencement d'entraînement selon l'une ou plusieurs des revendications précédentes, **caractérisé en ce qu'**un blocage de différentiel (33) est prévu dans la chaîne cinématique entre le différentiel (4 ; 28) intégré dans le groupe motopropulseur (1) et au moins l'essieu arrière moteur (35) du véhicule automobile.

13. Agencement d'entraînement selon la revendication 12, **caractérisé en ce que** le blocage de différentiel est branché en tant qu'accouplement commutable (33) entre les renvois d'angle (16, 17) du côté des roues, l'accouplement (33) reliant les deux arbres d'entraînement (20) connectés par entraînement aux roues (21).
